# EUROPEAN PATENT APPLICATION

(11) **EP 3 079 120 A1**
(43) Date of publication of application: **12.10.2016**
(21) Application number: 14867827.9
(22) Date of filing: 11.11.2014
(51) Int. Cl.: G06Q 50/30

(54) **SYSTEM FOR GUIDING FLOW OF PEOPLE AND METHOD FOR GUIDING FLOW OF PEOPLE**

(30) Priority: 04.12.2013 JP 2013250781
(71) Applicant: Hitachi, Ltd., Chiyoda-ku Tokyo 100-8280 (JP)
(72) Inventor: KOMAKI, Daisuke, Tokyo 100-8280 (JP); EGUCHI, Toshihiro, Tokyo 100-8280 (JP); UTSUMI, Masato, Tokyo 100-8280 (JP)
(74) Representative: Gill, Stephen Charles
(86) International application number: PCT/JP2014/079832
(87) International publication number: WO 2015/083503

(57) **Abstract**

Congestion in transportation facilities is eased by efficiently guiding users who stay in the transportation facilities such as railway stations. A people flow guiding system 1 comprises a required stay volume calculating part 20 acquiring the number of people who are able to get on at a station according to an operation condition of a railway line, and calculating the number of people who are unable to get on at the station by subtracting the number of people with demand of usage for each station retained beforehand from the number of people as acquired as a required stay volume for each station, a stay area selecting part 30 retaining a plurality of areas available from each station as stay areas for allowing a user to stay with correlated to capacities each being the number of people who are able to stay at each of the stay areas, and repeatedly performing a process of selecting the stay area from the stay areas as a guiding destination stay area in a predetermined order until a sum of the capacities of the guiding destination stay areas as selected is made equal to or larger than the required stay volume, and a guiding part 40 delivering guidance information for guiding people to the guiding destination stay areas selected.

## Description

### [Technical Field]

The present invention relates to a system for guiding flow of people and method for guiding flow of people.

### [Background Art]

There are various methods for easing congestion of transportation systems. When a premise of a railway station is congested due to train operation disruption, etc., for example, it is specifically considered to ease congestion of railway cars and platforms by guiding crowd to nearby shops, etc. In relation to this method, the incentive providing method of Patent Literature 1 (PTL1) has an object that, for easing congestion on occurrence of transportation disruption, by increasing users waiting outside of a station by giving an incentive to such users, as a result, congestion of the stations are eliminated. To accomplish this object, PTL1 proposes a technique of recording in a stored fare ticket in which fare is stored in advance exit information and re-entry information on transportation disruption, determining by a ticket gate if a user is the one who waited outside the station on transportation disruption, and performing a discount process and/or giving points based on degree of affection of an accident, a time period while the user waited outside the station and a distance traveled.

### [Citation List]

### [Patent Literature]

[PTL1]
Japanese Patent Application Laid-open Publication No. 2010-272035

### [Summary of Invention]

### [Technical Problem]

In the technique of PTL1, however, the number of the users required to wait outside the station is not considered. Therefore, the following problems may arise, in which the number of the users waiting outside the station is more than required to may cause excessive amount of incentive resultantly; discontent to a railway company may increase since the users who do not need to wait outside the station are forced to wait outside the station; and, on the other hand, congestion of the station premise cannot be sufficiently eased since the number of the users waiting outside the station is too small.

An object of the present invention is to provide a system for guiding flow of people and method for guiding flow of people that make it possible to efficiently ease congestion in transportation facilities by efficiently guiding users who stay in the transportation facilities such as railway stations.

### [Solution to Problem]

In order to accomplish the above object, the people flow guiding system according to an aspect of the present invention comprises a required stay volume calculating part configured to acquire the number of people who are able to use a transportation system at a transportation facility according to an operation condition of the transportation system, and calculating the number of people who are unable to use the transportation system at the transportation facility by subtracting the number of people with demand of usage for the transportation facility retained beforehand from the number of people as acquired as a required stay volume for the transportation facility, a stay area selecting part configured to retain a plurality of areas available from the transportation facility as stay areas for allowing a user to stay with correlated to capacities each being the number of people who are able to stay each of the stay areas, and repeatedly perform a process of selecting the stay area from the stay areas as a guiding destination stay area in a predetermined order until a sum of the capacities of the guiding destination stay areas as selected is made equal to or larger than the required stay volume, and a guiding part configured to deliver guidance information being information for guiding people to the guiding destination stay areas selected by the stay area selecting part.

### [Advantageous Effects of Invention]

According to an aspect of the present invention, it is enabled to provide a system for guiding flow of people and method for guiding flow of people that make it possible to efficiently ease congestion in transportation facilities by efficiently guiding users who stay in the transportation facilities such as railway stations.

### [Brief Description of Drawings]

[Fig. 1] Fig. 1 is a configuration diagram of a people flow guiding system 1 of an embodiment of the present invention.
[Fig. 2] Fig. 2 is a schematic diagram of an example of a railway route map and a station premise map for explaining the embodiment of the present invention.
[Fig. 3] Fig. 3 is a flow chart showing an example of a processing flow of a required stay volume calculating part 20 of the embodiment of the present invention.
[Fig. 4] Fig. 4 is an example of actual operation data acquired from an traffic management system, a ticket gate system, etc. by the required stay volume calculating part 20 of the embodiment of the present invention.
[Fig. 5] Fig. 5 is a flow chart showing an example of a processing flow of a stay area selecting part 30 of the embodiment of the present invention.
[Fig. 6] Fig. 6 is an example of a capacity definition information table 71 stored in a capacity defining part 70 of the embodiment of the present invention.
[Fig. 7] Fig. 7 is an example of a required time definition information table 72 stored in the capacity defining part 70 of the embodiment of the present invention.
[Fig. 8] Fig. 8 is an example of a guidance definition information table 81 stored in a guidance defining part 80 of the embodiment of the present invention.
[Fig. 9] Fig. 9 is an example of information presented through a guidance display system 41 by a guiding part 40 of the embodiment of the present invention.
[Fig. 10] Fig. 10 is an example of IC card data referred to by an incentive providing part 90 of the embodiment of the present invention.
[Fig. 11] Fig. 11 is an example of IC card data referred to by the incentive providing part 90 of the embodiment of the present invention.
[Fig. 12] Fig. 12 is an example of a route information table referred to by the incentive providing part 90 of the embodiment of the present invention.

### [Description of Embodiments]

An embodiment of the present invention will be described in detail hereinbelow with referring to the accompanying drawings. It is to be noted that, guiding means in the case of railway operation disruption and the like will be described in relation to the present embodiment, the present invention may be applied to other mass transit system with an operation diagram such as a bus system. Moreover, the present invention may be applied to such a case that when a plurality of performances are held in a day, for example in a facility such as a hall in which an event or the like is held, it is required to make an audience who cannot enter for the first performance wait.

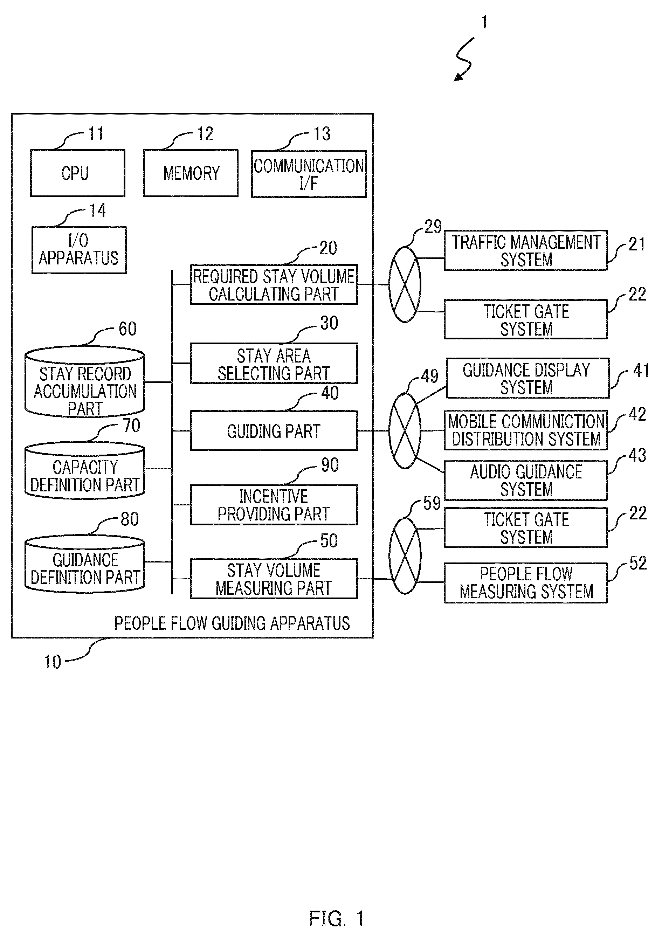

First, an entire configuration of a people flow guiding system 1 as a system for guiding flow of people according to the present embodiment will be described. Fig. 1 shows an example of an entire configuration of the people flow guiding system 1 according to the present embodiment. The people flow guiding system 1 includes a people flow guiding apparatus 10 in which principal functions of the system 1 are implemented, operational facilities such as an traffic management system 21, a ticket gate system 22, a publicity-related facilities such as a guidance display system 41, a mobile communication distribution system 42, and an audio guiding system 43, and information collection facilities such as a people flow measuring system 52, respectively coupled with the people flow guiding apparatus 10.

The people flow guiding apparatus 10 has a configuration of a computer including a processor 11 such as a central processing unit (CPU) and a micro-processing unit (MPU), a memory 12 having a memory device such as a RAM (Random Access Memory) and a ROM (Read Only Memory), a communication interface (communication I/F) 13 for performing data transmission/receiving processing with an external apparatus, an input/output apparatus 14 having an input device such as a keyboard, a mouse, a touch panel, and an output device such as a monitor display and a printer. The people flow guiding apparatus 10 is provided with respective functioning parts of a required stay volume calculating part 20, a stay area selecting part 30, a guiding part 40, a stay volume measuring part 50, and an incentive providing part 90, an stay record accumulation part 60, a capacity definition part 70, and a guidance definition part 80 for respectively storing various data to be used by the above functioning parts.

The respective functioning parts of the required stay volume calculating part 20, the stay area selecting part 30, the guiding part 40, the stay volume measuring part 50, and the incentive providing part 90 are implemented as computer programs that are executed on the memory 12 by the processor 11 as required. Each of the functioning parts above may be independently configured with a computer such as a personal computer, a server including a processor, a memory, a memory means such as a hard disk drive (HDD), a communication means, a display, and the like, and software to be operated thereon. It is to be noted that, in the people flow guiding apparatus 10, an operating system (OS) as an execution platform for the respective functioning parts, application software, etc. are implemented as required. The stay record accumulating part 60, the capacity definition part 70, and the guidance definition part 80 are memory means for storing various data in appropriate types such as a file and a table. The data to be stored therein will be described later.

The traffic management system 21 is a system performing traffic management in a transportation such as a railway to which the present people flow guiding system 1 is applied. The traffic management system 21 holds data such as an operation diagram for trains, etc., operation records of each train, and the like. The ticket gate system 22 includes devices such as automatic ticket gates, a fare adjustment device, and the like for managing entry/exit into/from a station premise and a management system of the above devices. The traffic management system 21 and the ticket gate system 22 are communicatively coupled with the people flow guiding system 10 through an appropriate communication network 29.

The guidance display system 41 has a function of receiving output information from the guiding part 40 to be described below and displaying guidance information for users on a display device such as an LED display panel. The mobile communication distribution system 42 has a function of distributing output information from the guiding part 40 to be described below to a variety of mobile communication terminals, etc. through a network 49 of a communication company. The audio guiding system 43 has a function of receiving output information from the guiding part 40 to be described below and audibly outputting guidance information to users. The people flow measuring system 52 has a function of measuring people flow in station premises, a stay area as a guidance destination, etc.

Next, the function of each of the functioning parts implemented in the above-mentioned people flow guiding apparatus 10 will be described. First, the required stay volume calculating part 20 will be described. The required stay calculating part 20 has a function of defining a required stay volume by grasping a difference between possible boarding volume (number of people who are able to use a transport) for a railway train and a boarding demand volume (number of people with demand of usage) at each station as a transportation facility as a supply/demand imbalance amount, and calculating a station where a supply/demand imbalance occurs and a required stay volume being a favorable amount for users to stay somewhere for decreasing the supply/demand imbalance amount at the station, that is, easing congestion at the station premises. Stay of users is caused by decrease of transportation capacity due to imbalance between demand and supply of movement according to operation disruption such as suspension and/or delay of transportation, or increase in demand for movement due to holding an event, or both of them. The information required for detecting imbalance in supply/demand is acquired through the communication network 29 from the traffic management system 21, the ticket gate system 22, and the like. The specific processing of the required stay volume calculating part 20 will be described later.

Next, the stay area selecting part 30 will be described. If the users corresponding to the above-mentioned required stay volume are made to stay at the station where the stay originally has occurred, such situations often may arise that users cannot wait comfortably, in which, for example, station premises and its surroundings may be in confusion with crowded people, and the users may not be able to have seats during waiting due to shortage of benches. For solving the above problem, the stay area selecting part 30 has a function of selecting an appropriate area for the users corresponding to the required stay volume calculated by the required stay volume calculating part 20 to wait as a guiding destination stay area. Here, the "area" means a place where people are made to stay in general, including a shop in station premise, i.e., within ticket gates, a platform, a passage, a space, a shop outside ticket gates. The specific processing of the stay area selecting part 30 will be described later.

Next, the guiding part 40 will be described. The guiding part 40 has a function of guiding people to the area selected by the stay area selecting part 30. This people flow guiding is realized by providing the target people with information that lets the target people know the area as a guiding destination, necessity of stay and/or incentive therefor. There are various methods of notifying the target people of the information such as displaying a guidance on a display screen at a station, at a shop, and/or in a railway car through the guidance display system 41, distributing a guidance to mobile communication terminals of travelers through the mobile communication distributing system 42, and/or making an audio guidance through a speaker at s station, at a shop, and/or in a railway car.

Next, the incentive providing part 90 will be described. The incentive providing part 90 has a function of providing users with incentive presented to users during guiding by the guiding part 40. An actual process of providing incentive is carried out in the form of discounting at a POS system installed at a shop, at a ticket gate system at a station, and the like. The incentive providing part 90 plays a role of presenting contents of incentive such as a discount amount, notifying that a condition of incentive providing is established at the above systems.

Next, the stay volume measuring part 50 will be described. The stay volume measuring part 50 has a function of measuring an amount of staying people at the area as a destination of people flow guiding from a station premise, or the like. The stay volume as measured is used for selecting an area where the required stay volume calculated by the required stay volume calculating part 20 is allowed to stay by an appropriate capacity. For measuring a stay volume, entry/exit information from a ticket gate system 22, measurement of number of people by a people flow measuring system 52, and the like may be used. The stay volume measuring part 50 is communicatively coupled with the people flow guiding apparatus 10 through an appropriate communication network.

Next, the capacity definition part 70 will be described. The capacity definition part 70 stores data of number of people made stay at each area, i.e., data defining a capacity in the form of a database, files, and the like in the stay area selecting part 70. On defining the capacity, if the subject area is a shop, the number of seats in the shop may be set as the capacity. Alternatively, the number of people actually having been allowed to stay in the past may be set to the capacity using a representative value such as an average value of the results of measurement by the stay volume measuring part 50. Moreover, the capacity may be set as the stay volume additionally allowed to stay in the future by measuring the stay volume that presently exists by the stay volume measuring part 50 and subtracting the measured result from the capacity as defined above or the capacity as the representative value having been measured in the past.

Next, the guidance definition part 80 will be described. The guidance definition part 80 stores data defining guidance contents and contents of incentive for guidance in a correlated manner for each area such as a shop as a guiding destination in the form of a database, files, and the like. The guiding part 40 refers to the data stored in the guidance definition part 80 and generates guidance information including guidance contents for guiding.

Next, the stay record accumulation part 60 will be described. The stay record accumulation part 60 stores a stay volume measured by the stay volume measuring part 50 as stay record data in each area in the form of a database, files, and the like.

It is to be noted that the required stay volume calculating part 20, the stay area selecting part 30, the guiding part 40, the stay volume measuring part 50, and the incentive providing part 90 may be configured as separate computers respectively, may be configured as a program or a plurality of programs on a single computer, or may be configured to operate on a plurality of computers in a distributed manner. In the case of configuring to operate on a plurality of computers in a distributed manner, the configuration is made such that the respective computers are coupled with a communication network and the information to be shared among the respective functioning parts is transmitted through the communication network.

The stay record accumulation part 60, the capacity definition part 70, and the guidance definition part 80 are implemented on a computer with a CPU, memory means such as a memory and an HDD, and communication means, such as a personal computer or a server with database software operating on the computer, or are held as files therein. The stay record accumulation part 60, the capacity definition part 70, and the guidance definition part 80 may be made to operate on the same computer on which the required stay volume calculating part 20, the stay area selecting part 30, the guiding part 40, the stay volume measuring part 50, and the incentive providing part 90 operate, or may be operated on a different computer.

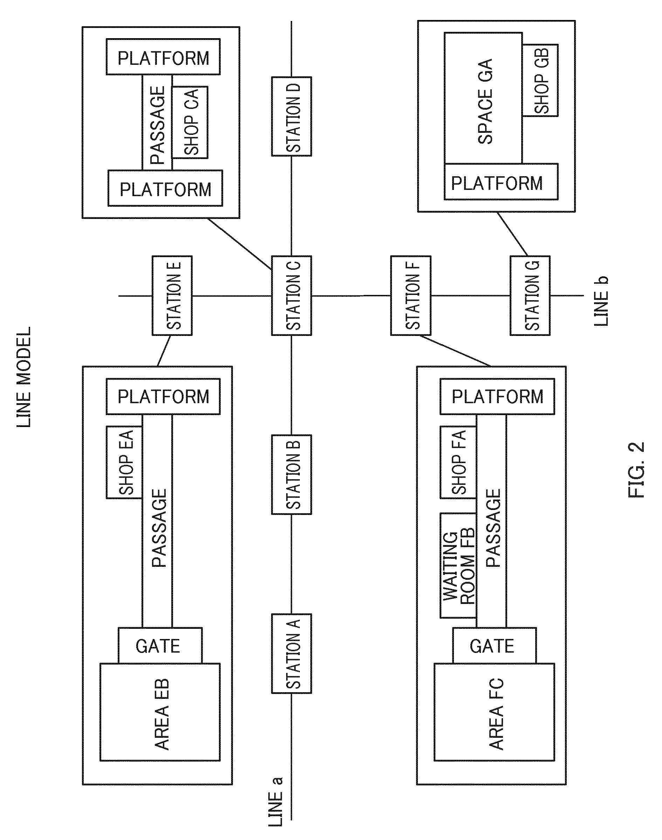

Next, an assumed line model on explaining the operation of the people flow guiding system 1 of the present embodiment will be described. Fig. 2 shows railway lines and structures of inside and outside of stations as a model of the present embodiment. The railway lines of the present embodiment have LINE a and LINE b. In the structures, LINE a is provided with STATIONS A, B, C, and D in order, and LINE b has STATIONS E, C, F, and G in order. LINE a and LINE b intersect at STATION C where transfer is made possible.

Now, in order to study the people flow guiding in relation to LINE b, the structure of each station of LINE b is assumed as shown in Fig. 2. STATION C has two platforms, one for LINE a and the other for LINE b, and the two platforms are connected with a passage. SHOP CA is provided as facing the passage. STATION E has a platform and a ticket gate for LINE b, a passage connects with therebetween, and SHOP EA is provided as facing the passage and AREA EB is provided outside the ticket gate. STATION F has a platform and a ticket gate for LINE b, a passage connects with therebetween, and SHOP FA and WAITING ROOM FB are provided as facing the passage and AREA FC is provided outside the ticket gate. STATION G has a platform and SPACE GA inside the station and SHOP GB is provided as facing SPACE GA. Here, SHOP CA, SHOP EA, AREA EB, SHOP FA, WAITING ROOM FB, AREA FC, SPACE GA, and SHOP GB are "areas" described with reference to the stay area selecting part 30, where users can be made to stay. In the present embodiment, for simplifying the explanation, the stay areas are limited to those as above. However, the platform, the passage, etc. in each station may be designated as areas where people can stay. It is to be noted that, in the case of a single line that does not have a junction station for multiple lines or a node such as STATION C, when guiding of people flow is carried out due to operation disruption, etc. on the subject line, it may be configured such that the stay area that can be reached without using the subject line is selected regarding the station as a destination of people flow guiding.

Next, referring to the configuration example of the people flow guiding system 1 in Fig. 1, the structure model of the railway line, the inside and the outside areas of the stations, and the like, an example of specific processing procedures in the present people flow guiding system 1 will be described. Here, it is assumed that there is a trouble with operation of LINE a due to a certain operation disruption, etc.

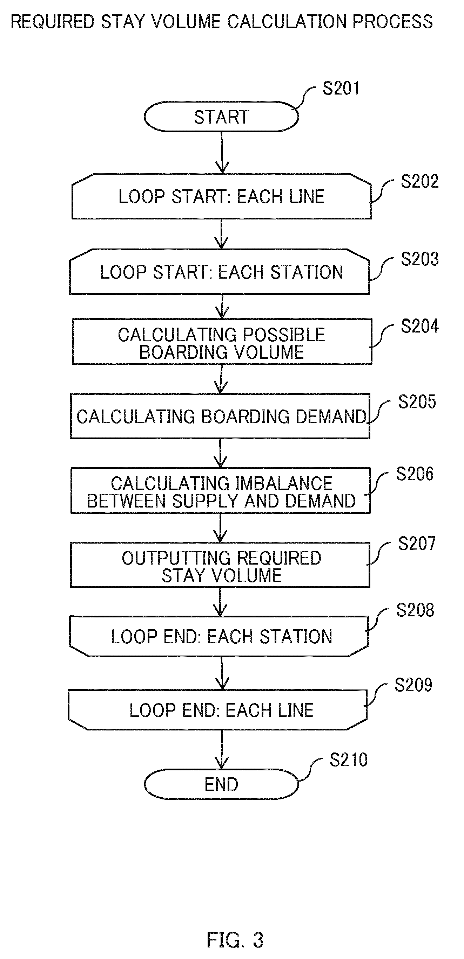

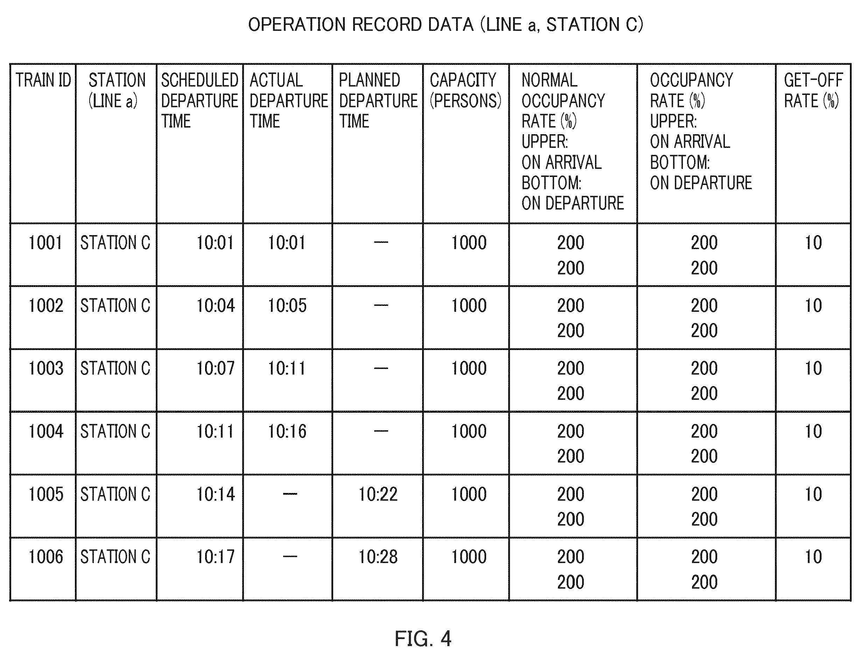

First, the people flow guiding apparatus 10 of the people flow guiding system 1 calculates a required amount of stay with the required stay volume calculating part 20. An example of the present processing will be described using a flow chart of Fig. 3 and a table of Fig. 4. Fig. 4 shows operation record data used by the required stay volume calculating part 20 including information acquired from the traffic management system 21, the ticket gate systems 22 and the like through the communication network 29.

The required stay volume calculating part 20 of the people flow guiding apparatus 10 starts processing when a predetermined processing start timing comes, for example, every minute or in response to receipt of a processing start instruction inputted through the input/output apparatus 14 (S201), and repeats the processes of S204-S207 for each station (Loop of S203-S208). The processing of required stay volume calculation may be carried out for all the stations or for only the stations designated as destinations where operation disruption and/or increasing demand is occurring.

Next, the required stay volume calculating part 20 calculates a possible boarding volume at the subject station (S204). The possible boarding volume is a predicted amount for next 10 minutes, or next 1 hour, or the like. The possible boarding volume may be calculated by determining how much capacity is left for the subject train after passengers get off at the subject station when an upper limit of occupancy rate is set at 200% of capacity, for example. Alternatively, an upper limit may be set to the data in the published reference, for example, evaluated values in "Discomfort due to congestion in railway vehicle" contained in Institution For Transport Policy Studies, "Manual of Estimate Technique for Railway Project, 2012 revised edition", September 25, 2012, that is, disutility values calculated with an occupancy rate and a traveling time, and how much capacity left as an occupancy rate when passengers get off at the subject station may be calculated.

Alternatively, the possible boarding volume may be calculated with such a method as a flow simulation. The flow simulation can be carried out with a computer program that is able to calculate a boarding station/time/passenger number, a boarding train, a transfer station/time/passenger number, a get-off station/time/passenger number, and the like based on a trend of O/D derived from an O/D survey or an estimated result of O/D for each passenger based on season ticket information and/or past boarding records in an IC card. Since it can be calculated that how many passengers have got on the subject train and how many passengers have got off at the subject station, the above possible boarding volume can be calculated.

Here, it is assumed that the operation records information in Fig. 4 is acquired from the external system such as the traffic management system 21 and the ticket gate system 22, and the method of calculating a possible boarding volume is calculated with the above information. The table in Fig. 4 shows operation records about LINE a at STATION C and an operation plan, operation records, boarding records for a train in a row. A train ID is an ID uniquely assigned to each train. The station is a station where the train leaves. The scheduled departure time is a departure time of the subject train at the subject station set on a diagram. The departure record is an actual time of departure. The departure plan is a departure time predicted or rescheduled reflecting an operation condition such as operation schedule disruption. The capacity is the number of passengers of the subject train where an occupancy rate is 100%. A normal occupancy rate is an average value, a central value, or the like on arrival or on departure at STATION C in a normal condition. An occupancy rate is that on arrival or on departure at STATION C. A get-off rate is a ratio of passengers getting off in a passenger number on the train on arrival at STATION C.

The possible boarding volume is a predicted value that may be predicted with latest records. In the example of Fig. 4, the 4 trains specified by train IDs "1001", "1002", "1003", and "1004" leave "STATION C" during 10:00-10:20. Since, for each train, the capacity is 1000 and the occupancy rate is 200%, in this case, as a record, 4 trains x 1000 passengers x 200% = 8000 passengers are transported. Here, where 8000 passengers multiplied by the 10% of the get-off rate at "STATION C", it can be calculated that 800 passengers per 20 minutes, i.e., 400 passengers per 10 minutes are to get on at STATION C.

Alternatively, the possible boarding volume may be predicted with an operation schedule. In the example of Fig. 4, the 2 trains specified by train IDs "1005" and "1006" are scheduled to leave "STATION C" during 10:20-10:30. Since, for each train, the passenger capacity is 1000 and the occupancy rate is 200%, in this case, 2 trains x 1000 passengers x 200% = 4000 passengers can be transported. Here, where 4000 passengers multiplied by the 10% of the get-off rate at "STATION C" makes 400, it can be calculated that 400 passengers per 10 minutes are to get on at STATION C.

Next, the required stay volume calculating part 20 calculates a boarding demand volume at the subject station (S205). The boarding demand volume is a predicted value that indicates how many passengers will get on the train of the subject line at the subject station in next 10 minutes, next 1 hour, or the like. The boarding demand volume can be calculated with a method such as a flow simulation. Using a flow simulation, it can be calculated how many people enters at the subject station and get on for the subject line, and how many people get on for the subject line from the other line at the subject station. Therefore, the above boarding demand volume can be calculated.

Alternatively, the boarding demand volume can be calculated by acquiring the number of people entered through the ticket gate system 22 in the past certain time, and multiplying the acquired number by a constant in which a ratio of people who get on for the subject line for the acquired number is set beforehand. Here, the past certain time means the number of people who are likely to get on in next 10 minutes, or the like such as the number in the past 10 minutes or the number since 1 minute before departure of the previous train till present.

Here, it is assumed that the information in Fig. 4 is acquired from the traffic management system 21, the ticket gate system 22, and the like, and the calculation method of the boarding demand volume using the above information will be described. In a normal condition, the 6 trains specified by the train IDs of "1001"-"1006" are operated in 20 minutes during 10:00-10:20, the total passenger capacity is 6000, the occupancy rate on arrival at STATION C is 200%, on departure is 200%, and the get-off rate at STATION C is 10%. The passenger number on departure is 6000 x 200% = 12000, similarly on arrival is 12000, and the number of get-off passengers at STATION C is 12000 x 10% = 1200. Since, "the number of passengers on arrival" - "the number getting of" + "the number getting on" = "the number of passengers on departure", the number of passengers getting on in a normal condition is calculated as 1200 psaaengers/20 minutes, or 600 passengers/10 minutes.

Next, the required stay volume calculating part 20 calculates imbalance between the supply and the demand with the boarding demand volume and the possible boarding volume as acquired (S206). Here, the imbalance is calculated simply by subtracting the possible boarding volume calculated in S204 from the boarding demand volume calculated in S205. In the example in Fig. 4, the boarding demand volume is 600 persons/10 minutes, the possible boarding volume is 400 persons/10 minutes, and the imbalance of supply/demand is obtained as 200 persons/10 minutes.

Here, since the boarding demand volume is calculated in S205 as assumed to be the same as in a normal condition, the imbalance of supply/demand is considered to have occurred due to change of the possible boarding volume relative to in a normal condition. In a flow simulation or the method of using the number of entered people through the ticket gate system 22 in S205, the boarding demand volume varies in response to change in people flow. Resultantly, the imbalance of supply/demand sometimes may occur due to increase of the boarding demand volume. Moreover, imbalance in supply/demand may occur every day constantly as in the case of commuter jam.

Based on the results above, the required stay volume calculating part 20 calculates a required stay volume (S207). In the example in Fig. 4, the required stay volume equals to the imbalance between demand and supply and the required stay volume for STATION C is determined 200 persons/10 minutes. This time, the required stay volume for 10 minutes from the present time has been obtained. According to the similar method, the required stay volume in the future for 10 minutes from 10 minutes after may be obtained. The required stay volume may be calculated for the other time slot as changed such as for 1 hour from the present time.

The required stay volume calculating part 20 repeats the processing for each station above for each line or for the lines designated by the input/output apparatus 14 (Loop of S202-S209), and, if determined that the processing for the target stations and the line has been completed, terminates the processing (S210). According to the required stay volume calculating processing, users who should be made stay at each station can be obtained quantitatively. It is to be noted that, in the case that the people flow guiding system 1 is applied to the facilities other than those in transportation such as stations, for example, to the hall where an event or the like is held, the required stay volume can be obtained by substituting the possible boarding volume and the boarding demand volume with the facility usage capacity and the facility usage demand respectively. In this case, the stay areas may be selected as the facilities available for the subject facility beforehand.

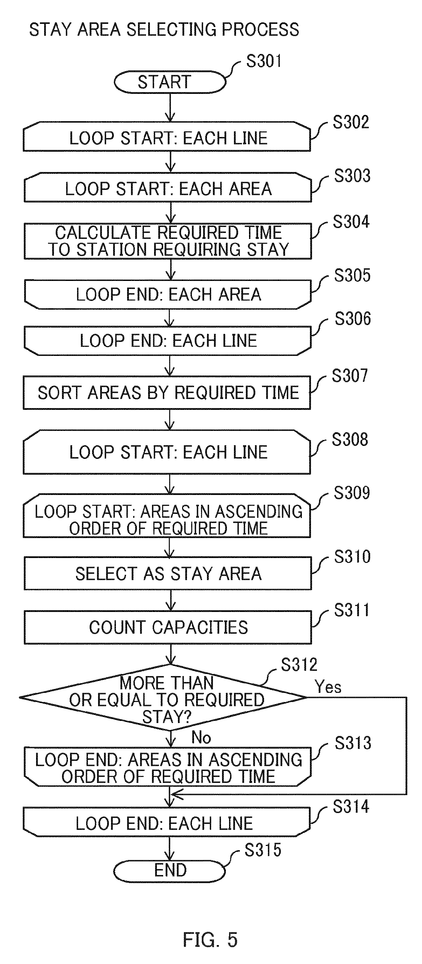

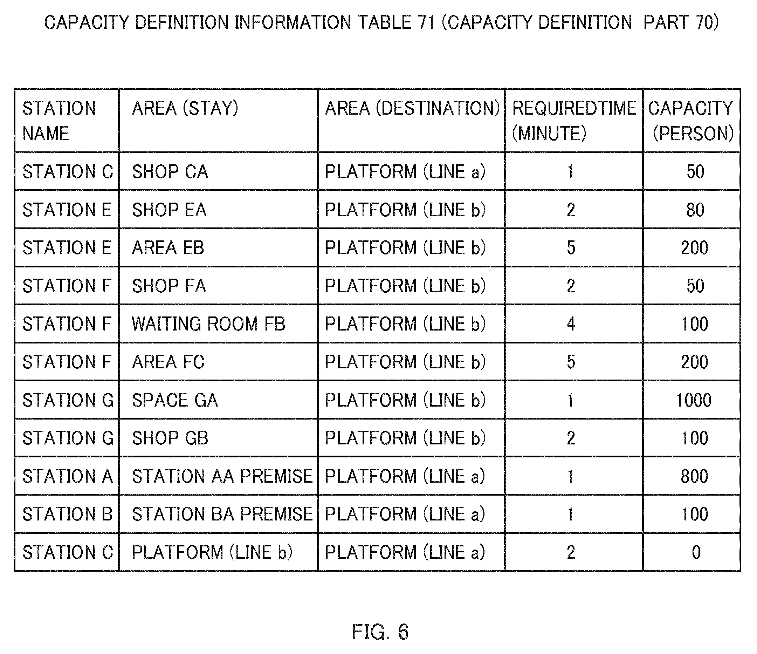

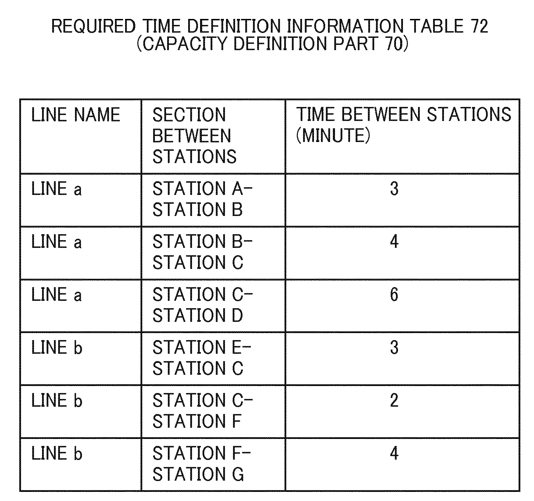

Next, the stay area selecting process will be described. In the stay area selecting process, the area where users are made stay is selected by the stay area selecting part 30. An example of the present process will be described using the flow chart in Fig. 5 and the data stored in the capacity definition part 70 in Figs. 6, 7.

First, the stay area selecting part 30 starts the processing subsequent to the end of the required stay volume calculating process (S301), and repeats the process of S304 for each area (Loop of S303-S305) and for each line (Loop of S302-S306) indicated in the table of the capacity definition part 70 in Fig. 6. Here, the areas in the capacity definition information table 71 of the capacity definition part 70 in Fig. 6 corresponds to the areas in Fig. 2 to which a stay capacity and required time for reaching the destination area from each of the stay areas.

The stay area selecting part 30 calculates required time to the station that is obtained by the required stay volume calculating part 20 (S304). In the examples shown in Figs. 2, 3, and 4, the required stay volume at STATION C is 200 persons/10 minutes and the required time from each of the areas to the platform of LINE a at STATION C.

An example of a required time calculating process will be described referring to Figs. 6 and 7. Here, Fig. 6 shows the capacity definition information table 71 stored in the capacity definition part 70 as mentioned above. Each row of the capacity definition information table 71 includes "capacity (number of people)" for the area shown in "area (stay)" column and "required time (minute)" from "area (stay)" to "area (destination)" for the stations shown in "station" column. Fig. 7 shows a required time definition information table 72 stored in the capacity definition part 70 indicating travel time by train between stations of each railway lines (LINE a, LINE b). Here, the required time, the travel time, and the like mean average travel time or alternative typical travel time.

First, referring to the capacity definition information table 71 in Fig. 6, the required time from the area "SHOP CA" to the platform of LINE a at STATION C in the first row is calculated. SHOP CA attached to STATION C is 1 minute distance from the platform. In other words, it is 1 minute from SHOP CA to the platform of LINE a at STATION C. Regarding the area "SHOP EA" in the second row, the required time from SHOP EA to the platform of LINE b at STATION E is 2 minutes. Further, the travel time from STATION E to STATION C is 3 minutes as shown in the fourth row of the required time definition information table 72 in Fig. 7. Furthermore, the required time from the platform of LINE b to the platform of LINE a at STATION C is 2 minutes as shown in the 11th row in Fig. 6. As a result, the total required time is calculated to be 7 minutes. According to the similar processing, the required time to the platform of LINE a at STATION C is as follows: 10 minutes for AREA EB, 6 minutes for SHOP FA, 8 minutes for WAITING ROOM FB, 9 minutes for AREA FC, 11 minutes for SPACE GA, and 12 minutes for SHOP FA, 8 minutes for STATION PREMISE AA, and 5 minutes for STATION PREMISE BA. Here, STATION PREMISE AA and STATION PREMISE BA belong to STATION A and STATION B on LINE b respectively. Therefore, even when imbalance in supply/demand occurs at STATION C, the passengers continue to be onboard without getting off, unless they get off and get on again at STATION C. Thus, it may be considered that no stay is required at STATION PREMISES AA and BA. On the other hand, making people stay at STATION PREMISES AA and BA causes the stay at the stations on LINE b, thus the stay at STATION PREMISES AA and BA may be adopted. Here, the processing is carried out on the assumption that the above stay at STATION PREMISES AA and BA is not adopted, the processing contents are the same if the stay is adopted.

Next, the stay area selecting part 30 sorts the areas by the required time calculated in S304 in ascending order. In the example of Fig. 6 and 7, the areas are sorted as follows: 1 minute for "SHOP CA", 6 minutes for "SHOP FA", 7 minutes for "SHOP EA", 8 minutes for "WAITING ROOM FB", 9 minutes for "AREA FC", 10 minutes for "AREA EB", 11 minutes for "SPACE GA", and 12 minutes for "SHOP GB".

Next, the stay area selecting part 30 executes the processes S310-S312 for the areas sorted in S307 in ascending order of the required time (Loop of S309-S313). First, the execution is done for "SHOP CA". The stay area selecting part 30 selects SHOP CA as a place for stay in S310 and stores the selection in the memory 12 or the HDD. The stay area selecting part 30 acquires the capacity of "SHOP CA" from the first row of Fig. 6 and sets 50 persons thereto in S311. Then, the stay area selecting part 30 determines if the capacity of "SHOP CA" is larger than or equal to the required stay volume (S312) . In this case, the capacity of "SHOP CA" is 50 persons that is smaller than 200 persons/10 minutes calculated by the required stay volume calculating part 20 (S312, No), and repeats processes S310-S312 for the next area "SHOP FA".

The stay area selecting part 30 selects SHOP FA as a stay area and stores the selection in the memory 12 or the HDD (S310) . The stay area selecting part 30 acquires the capacity of "SHOP FA" from the fourth row of Fig. 6 and sets 50 persons thereto to obtain 100 persons of the accumulated value with the capacity of "SHOP CA" in S311. 100 persons that is smaller than 200 persons/10 minutes calculated by the required stay volume calculating part 20 (S312, No), the stay area selecting part 30 repeats processes S310-S312 for the next area "SHOP EA".

The stay area selecting part 30 selects SHOP EA as a stay area and stores the selection in the memory 12 or the HDD (S310) . The stay area selecting part 80 acquires the capacity of "SHOP EA" from the second row of Fig. 6 and sets 80 persons thereto to obtain 180 persons of the accumulated value with the capacities of "SHOP CA" and "SHOP FA" in S311. 180 persons that is smaller than 200 persons/10 minutes calculated by the required stay volume calculating part 20 (S312, No), the stay area selecting part 30 repeats processes S310-S312 for the next area "WAITING ROOM FB".

The stay area selecting part 30 selects WAITING ROOM FB as a stay area and stores the selection in the memory 12 or the HDD (S310). The stay area selecting part 100 acquires the capacity of "WAITING ROOM FB" from the fifth row of Fig. 6 and sets 100 persons thereto to obtain 280 persons of the accumulated value with the capacities of "SHOP CA", "SHOP FA", and "SHOP EA" in S311. The number of 280 persons is larger than 200 persons/10 minutes calculated by the required stay volume calculating part 20 (S312, Yes), the stay area selecting part 30 selects the 4 places of "SHOP CA", "SHOP FA", "SHOP EA", and "WAITING ROOM FB" as the stay areas. The above processing is repeated if there is any other line to be processed (Loop of S308-S314). When all the processes have been completed, the processing is terminated (S315).

In the above example of the processing, the stay areas required for the stay volume calculated for the required stay volume for the next 10 minutes. However, for such a case that imbalance in supply/demand is predicted for longer time, for example, it is possible to calculate the required stay volume for the next 30 minutes by the required stay volume calculating part 20 and to select the required stay area by the stay area selecting part 30. In the case that the required stay volume is 600 persons simply three times as much as the above example, according to the similar processing, 6 places of "SHOP CA", "SHOP FA", "SHOP EA", "WAITING ROOM FB", "AREA FC", and "AREA EB" are selected since the capacity accumulated value reaches 680 persons more than 600 persons for the places.

Here, in the processing example of the stay area selecting part 30 shown in Fig. 5, the areas were sorted according to the required time in S307. This is because the followings were expected: the shorter the required time to the destination platform is, the quicker adjustment of imbalance in supply/demand is made, and a level of contentment of the staying people is improved since people can get back to moving quickly when the imbalance in supply/demand is resolved. However, in the case that the effects of increase in sales of shops, increase in contentment of the passengers with comfortable stay, and/or cost saving capable of guidance with less incentive because of the stay of the people, the areas may be sorted by expected sales increase per person, an average stay time per person, or required amount of incentive for a person. Alternatively, it is possible to convert the above all effects into financial value and to sort the areas according to the amount of utility improvement per staying person as the converted value. The expected sales increase per person, an average stay time per person can be calculated based on actual records by acquiring the number of people staying on guiding and variation of sales obtained from a sales management system such as a POS system by the stay volume measuring part 50 to be described later.

Further, the total capacity for the stay areas are calculated based on the number of people for the fixed capacity for each area as defined in Fig. 6. However, for calculating the total capacity, the additional capacity as the number of people to be added in an area can be also used that is obtained by measuring the number of people already staying in a certain area by the stay volume measuring part 50 to be described later. Alternatively, the expected number of people to be guided actually can be adopted as the capacity that is obtained by calculating variation in the number of people having stayed on past occasions of guiding and calculating the average value or the center value of the same by the stay volume measuring part 50 to be described later. Further, in the case of studying people flow guidance for stations on a single line, selection of stay area may be made such that the stay area is selected from those registered regarding the target stations to which no need to move using the subject line. Similarly, in the case of studying people flow guidance not for transport facility such as a station but for a general facility such as a hall, the area may be selected only from the stay areas registered regarding the target facility.

According to the above stay area selecting processing, the stay areas satisfying required stay volume can be selected with applying a standard such as convenience of users and benefits for shops and the like to be used as a stay area.

Next, the function of the guiding part 40 will be described. The guiding part 40 generates information for guiding people to the area (s) selected by the stay area selecting part 30. The guidance of users is actually made through the guidance display system 41 according to the followings, for example: displaying guidance for guiding passengers to get off at intermediate stations on an onboard display; displaying guidance for urging users to stay at current stations on a guidance display at stations, on digital signage, and/or on a train arrival guiding display; and/or displaying guidance for urging users to stay outside stations on a guidance display outside stations.

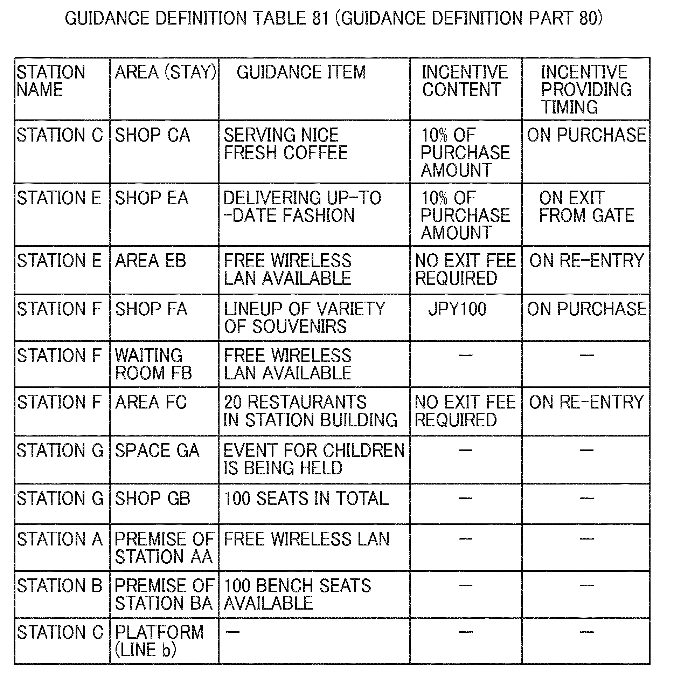

Fig. 8 shows an example of the guidance definition information table 81 stored in the guidance definition part 80 used by the guiding part 40. The guiding part 40 refers to the table in Fig. 8 in relation to the stay area selected by the stay area selecting part 30 and outputs the information regarding the contents of the corresponding guidance at predetermined timings. In the example of Fig. 8, the respective items of the stay area, the guidance item, the incentive contents, i.e., benefits, the timing of providing incentives are recorded as being correlated with each other. For example, for SHOP FA as a stay area, as shown in the fourth row of Fig. 8, "LINEUP OF VARIETY OF SOUVENIRS" is recorded as the guidance item and the incentive for guidance is recorded in that "JAPANESE YEN (JPY) 100" is offered "ON PURCHASE". These incentives are made valid when the subject area is selected as the stay destination area by the stay area selecting part 30.

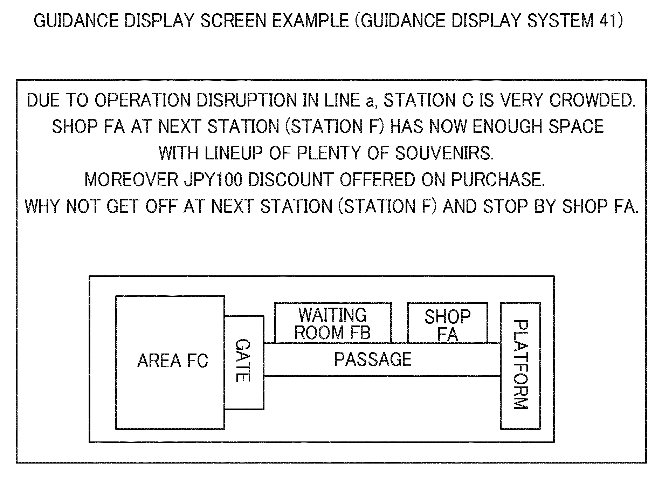

Fig. 9 shows an example of onboard posting for advising users of getting off at STATION F for visiting "SHOP FA". "SHOP FA" is one of the areas selected by the above stay area selecting part 30. The third row and fifth row of the onboard posting are displayed using "guidance item" of "SHOP FA" in the fourth row and "incentive contents", "incentive providing timing" of Fig. 8 respectively.

Similarly, outside the ticket gates of STATION F, the guidance such as "STATION C IS VERY CROWDED DUE TO OPERATION DISRUPTION OF LINE A. WAITING OUTSIDE THE STATION IS ADVISED.", "THERE IS ROOM IN SHOP FA IN THE STATION PREMISE. WAITING AT SHOP FA IS ADVISED." and the like can be displayed.

In the case that a mobile communication terminal with a SF boarding ticket function or a mobile communication terminal with a GPS function is used, the guidance as shown in Fig. 8 may be acquired by making inquiry to the people flow guiding system 1. In this case, the data such as users' getting on/getting off record, a current position presumed with the users' getting on/getting off record, a place of train transfer, or a current position proven by GPS and a place of train transfer presumed with the current position, or the like are transmitted from a mobile communication terminal to the people flow guiding system 1, the stations of getting on/ getting off, the intermediate stations, the transfer station, etc. are required/presumed by the people flow guiding system 1, and if it is determined that the user passes the station where stay is required according to calculation of the required stay volume calculating part 20, the guidance may be delivered to the mobile communication terminal so that the guidance is displayed on the terminal. The guidance may be delivered when the terminal comes close to the stay area selected by the stay area selecting part 30 or immediately after the determination has been made.

Next, the incentive providing part 90 will be described. Regarding the incentive presented by the guiding part 40, the incentive providing part 90 sends a notice to the POS system of the shop offering price discount or a ticket gate system. In one case, the notice is sent with the specific contents such that a discount of "JPY100", "10% of purchased amount", or the like as defined in Fig. 8. In the other case, as the notice, the signal for setting the above systems to the operational mode of providing an incentive such as "Start providing incentive for stay" is sent. As a matter of fact, as the methods of offering discount by a POS system, there are the afore-mentioned various inventions. The method of providing discount at a ticket gate system is described in Japanese Patent Application Laid-open Publication No. 2010-272035 and the like.

Regarding the configuration of the incentive providing part 90, there is a problem of how to decide a target user for providing incentive. According to categorization, there is a pattern of selecting a purchaser as a target as in the example of SHOP FA shown in Fig. 8. Other than the above, the pattern of providing incentive to all the users who stayed at the subject place, and the pattern of providing incentive only to the users who are confirmed to have passed the station requiring stay after stay has been required are considered.

"On re-entry" in the third row of Fig. 8 regarding "AREA EB" as the incentive providing timing shows an example of the pattern of providing incentive to all the users stayed at the subject place. In this case, the incentive of "No exit fee required" is provided to all the users who went to "AREA EB" through the ticket gate from the inside of the gate at STATION E and then passed the gate again to enter STATION E. The exit fee as an amount provided as incentive may be a fixed fee such as an initial boarding fee at STATION E or may be calculated for each user separately.

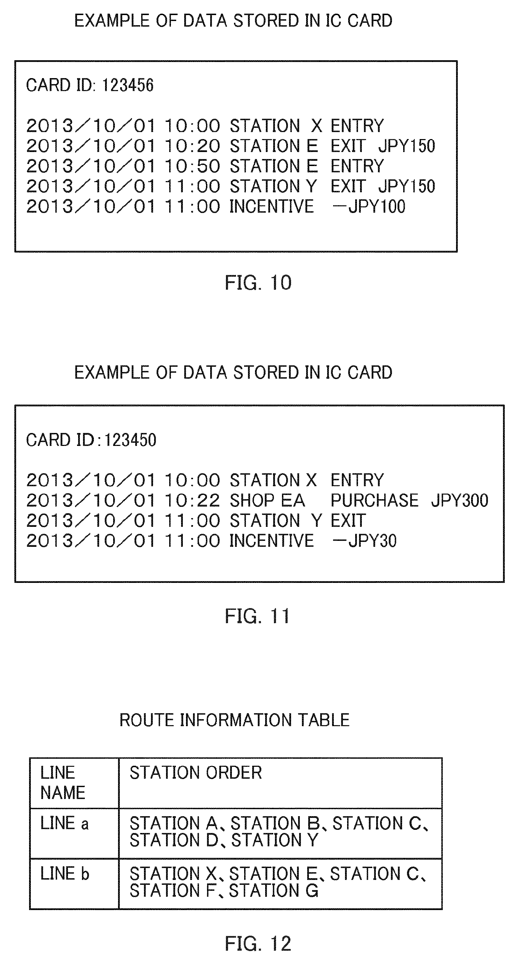

Here, referring to Fig. 10, the method of calculating the incentive for each user separately will be described. Fig. 10 shows an example of data stored in a SF boarding ticket (memory device) such as an IC card. In the IC card (ID: 123456) issued to users, a date, a place, and a content of action are recorded in mutually correlated manner as shown in Fig. 10. As in the example of Fig. 10, if the incentive providing part 90 determines the entry record at STATION X and the exit record at STATION E, the entry record at STATION E and the exit record at STATION Y are recorded in this order based on the information acquired from the ticket gate system 22, the incentive providing part 90 determines that the user of the subject IC card has stayed at AREA EB since the exit and entry records at STATION E exists and the incentive providing condition recorded in the third row of Fig. 8 is satisfied. Further, the incentive providing part 90 acquires the fare from STATION X to STATION Y from the fare master or the like of a railway company. If the fare is JPY200, the difference from the total amount of JPY300 as a sum of JPY150 on the exit at STATION E and JPY150 on the exit at STATION Y recorded in the IC card is calculated as JPY100. Then, the incentive providing part 90 writes the exit fee of JPY100 back into the IC card. Since the exit fee is not fixed until the exit at STATION Y, the determination may be made at the timing when the exit record at STATION Y is written into the IC card. Alternatively, the above determination may be made for all the IC cards for a fixed time period such as for one day afterward. The incentive providing part 90 may perform the determination process for the incentive condition and the incentive content that is fare discount here described above using the records written into the IC cards or using the read/write records for the IC cards recorded in a server.

The incentive providing timing "On exit" regarding "SHOP EA" in the second row of Fig. 8 shows an example of the pattern of providing incentive only to the users having been confirmed to pass the stay required station after stay has been required. In this case, the incentive "10% of purchase amount" is provided to the IC card when it is confirmed that the user has passed STATION C after purchase at SHOP EA.

Next, referring to Figs. 11 and 12, the method of determining if incentive providing is required or not on exit will be described. In the case that the entry record at STATION X, the purchase record at SHOP EA, and the exit record at STATION Y are recorded in this order in the IC card (ID: 123450) as shown in Fig. 11, the incentive providing part 90 determines that the condition in the second row in Fig. 8 is fulfilled since there is the purchase record at SHOP EA. Further, since the exit at STATION Y is recorded, the incentive providing part 90 makes a search if the station requiring stay, that is STATION C in this case, exists on the route from STATION X to STATION Y using the route information table in Fig. 12. While searching is made along with the route from STATION X to STATION Y in Fig. 12, there is found only the route from STATION E to STATION Y through STATION C and STATION D, and passing of STATION C is confirmed. Therefore, the incentive providing part 90 writes JPY30 of 10% of the purchase JPY300 at SHOP EA as incentive back into the IC card according to the condition in the second row of Fig. 8. This determination may be performed at the timing when the exit record at STATION Y is written or for all the IC cards for a fixed time period such as for one day afterward. The above determination may be made using the records written into the IC cards or using the read/write records for the IC cards recorded in a server. In the case that a plurality of routes for reaching STATION Y from STATION X, the incentive may be provided if at least one route passing STATION C is included therein or only in the case that one of the shortest route, the fastest route, and the route with minimum train transfers that passes STATION C exists.

According to the processing by the incentive providing part 90, people can be moved effectively from a crowded station and so on to a stay area by presenting a condition for providing incentive, and it is made possible to provide incentive to the people who cooperated for stay appropriately.

Next, the stay volume measuring part 50 will be described. The stay volume measuring part 50 is a means for measuring a stay volume in the target area. The stay volume measured by the ticket gate system 22, the people flow measuring system 52 and the like is accumulated in the stay record accumulation part 60.

The stay volume measured by the stay volume measuring part 50 when guiding is made can be used by being applied to one or more of the following 4 methods. In the first method, the stay volume measured is stored in a database or the like, the average value, the maximum value or the like of the actual stay volume is used instead of the fixed value of the values in the capacity (people) column of the capacity definition part 70 shown in Fig. 6. For example, the stay volume made when the guiding part 40 guides people to "WAITING ROOM FB" is measured every 10 minutes to be recorded such as "80", "120", "120", "100", and the capacity of "WAITING ROOM FB" can be set "105" based on the average value "105" of the measured values. In this case, the capacity can be made closer to the actual capacity on guiding than the fixed value calculated from the number of seats or the like. The stay volume may calculated once a day from the record accumulated in the stay record accumulation part 60 to be accumulated in the capacity (people) column of the capacity definition part 70. Alternatively, in S311 by the stay area selecting part in Fig. 5, the record is acquired from the stay record accumulation part 60 and the representative value to be used may be calculated instead of acquiring the capacity from the capacity definition part 70.

In the second method, when stay is required, the stay volume actually to be added is calculated from the current stay volume. The possible stay volume is used in the process of counting the capacity in S311 by the stay area selecting part 30 in Fig. 5. For example, in the case that "WAITING ROOM FB" is chosen as a target by the stay area selecting part 30, the capacity in Fig. 6 is 100. Thus, if the current stay volume is measured to be 30 by the stay volume measuring part 50, the actual volume for further stay can be set 70. In performing this process, 70 that is acquired by subtracting 30 measured by the stay volume measuring part 50 from 100 defined in the capacity definition part 70 in S311 in Fig. 5 is made to be the capacity to be accumulated.

In the third method, the stay volume as a result of the guidance by the guiding part 40 is measured and the additional stay place is selected if the stay volume is in short. Accordingly, prompt action to the situation where the shortage of the stay volume exists can be made and the stay volume can be regulated properly. In this case, the stay volume for each stay area is measured by the stay volume measuring part 50 regularly, and if the stay volume does not reach the capacity in Fig. 6, the process of the stay area selecting part 30 in Fig. 5 can be carried out by defining the capacity shortage as a new required stay volume. In the above procedure, the areas already selected in the previous process of the stay area selecting part 30 and for which guidance is made by the guiding part 40 are rejected, and the processes of S302-S312 are carried out only for the rest of the areas. In the above-described example of the processing of the stay area selecting part 30, the areas providing 280 persons/10 minutes as the total of the four places of "SHOP CA", "SHOP FA", "SHOP EA", and "WAITING ROOM FB" have been selected for the required stay volume of 200 persons/10 minutes. Here, if it is assumed that the total stay volume of those for the four areas measured by the stay volume measuring part 50 is 180 persons smaller than 200 persons, the processes of S302-S312 are carried out on the assumption that "SHOP CA" in the first row, "SHOP FA" in the fourth row, "SHOP EA" in the second row, and "WAITING ROOM FB" in the fifth row do not exist in the capacity definition part 70 in Fig. 6. As a result, by adding 200 persons of "AREA FC" in the sixth row to 180 persons of the measured stay volume, the required stay volume exceeds 200 persons. Accordingly, by selecting "AREA FC" as an additional stay area, the guiding processing by the guiding part 40 can be carried out.

In the fourth method, in the case that the stay volume is short when the stay volume as a result of guidance by the guiding part 40, the stay volume is urged to increase by adding incentive for the subject stay area. For one example, it can be configured that the stay volume of each stay area is regularly measured by the stay volume measuring part 50 and notified to the stay area selecting part 30, and, if the stay area selecting part 30 determines that the measured stay volume is short for the required stay volume, notification is sent to the incentive providing part 90. The incentive providing part 90 can be so configured to change the incentive set to the stay area as selected on receipt of the notification, in that, for example, the incentive is increased by 10%. In "SHOP FA" in Fig. 8, if the current stay volume measured by the stay volume measuring part 50 is 30 persons shorter than 50 persons shown in Fig. 6, while the incentive as defined is JPY100, it is made possible for the incentive providing part 90 to increase the incentive to JPY110 by 10% to attempt rapid increase in stay volume.

Next, the processing of measuring actual stay volume by the stay volume measuring part 50 will be described. First, the stay volume at the places outside the ticket gate such as AREA EB, AREA FC shown in Fig. 2 can be presumed from the entry/exit information acquired from the ticket gate system 22. In the case that the number of exit is 100 persons/10 minutes and the number of entry is 100 persons/10 minutes in a normal condition while the number of exit is 300 persons/10 minutes and the number of entry is 100 persons/10 minutes when the guiding part 40 is guiding the people to AREA EB and AREA FC, it is determined that 200 persons stayed outside the ticket gate for 10 minutes.

Further, for the shops like SHOP EA, SHOP CA, the following methods may be employed: shooting the inside of the shop and determining the number of people staying through image recognition or the like; preparing counters for entry and exit respectively and determining the number of people staying as the difference between the numbers of people entered and exited; and managing presence or absence at seats in the shop by a shop information system and acquiring therefrom the information of the number of people in the shop.

According to the people flow guiding system 1 of the present embodiment above, in response to the congestion of transportation due to operation disruption and the like, it is made possible to guide the proper number of people to a proper place and let the people stay there. Accordingly, the problems such that the incentive for guiding is made excessive by guiding the people more than required, discontent to railway companies and the like is amplified by guiding the people who are not required to wait in a stay area; on the other hand the congestion in the premise of the station or the like cannot be eased sufficiently without proper guiding of the people to stay area can be avoided and ease of congestion is realized properly.

It is to be noted that, the present invention is not limitative to the above embodiments and a variety of modifications are contained therein. For example, the above embodiments are described in detail so as to facilitate understanding of the present invention, and the present invention may not be limitative to those with all the configurations as described. Furthermore, a part of an embodiment may be substituted with a configuration of another embodiment and the configuration of another embodiment may be added to the configuration of an embodiment. Further, for a part of the configuration of each embodiment, addition of another configuration, deletion, and/or substitution may be made.

## Claims

1. A people flow guiding system comprising:
a required stay volume calculating part configured to acquire the number of people who are able to use a transportation system at a transportation facility according to an operation condition of the transportation system, and calculating the number of people who are unable to use the transportation system at the transportation facility by subtracting the number of people with demand of usage for the transportation facility retained beforehand from the number of people as acquired as a required stay volume for the transportation facility;
a stay area selecting part configured to retain a plurality of areas available from the transportation facility as stay areas for allowing a user to stay with correlated to capacities each being the number of people who are able to stay each of the stay areas, and repeatedly perform a process of selecting the stay area from the stay areas as a guiding destination stay area in a predetermined order until a sum of the capacities of the guiding destination stay areas as selected is made equal to or larger than the required stay volume; and
a guiding part configured to deliver guidance information being information for guiding people to the guiding destination stay areas selected by the stay area selecting part.

2. The people flow guiding system of claim 1, wherein
a required time from the transportation facility to each of the stay areas with correlated to the respective stay areas, and
the stay area selecting part selects the stay areas in ascending order of the required time as the guiding destination stay areas.

3. The people flow guiding system of claim 1 or 2, wherein
a benefit that can be acquired when a user uses the stay area is retained with correlated to each of the stay areas, and
the people flow guiding system comprises an incentive providing part configured to operate so that data corresponding to the benefit are stored in a memory device held by the user at predetermined timings for the users of the guiding destination stay areas who are guided by the guiding part.

4. The people flow guiding system of claim 3, wherein
the incentive providing part configured to operate so that the data corresponding to the benefit are stored in the memory device held by the user at the predetermined timings when the incentive providing part determines that a usage history stored in the memory device of the user fulfills a predetermined condition.

5. The people flow guiding system of claim 1, wherein
the people flow guiding system comprises a stay volume measuring part configured to measure an actual stay volume indicating the number of people actually staying at each of the stay areas, and,
when a sum of the capacities are calculated, the stay area selecting part subtracts the actual stay volume measured by the stay volume measuring part from the sum.

6. The people flow guiding system of claim 1, wherein
the people flow guiding system comprises a stay volume measuring part configured to measure an actual stay volume indicating the number of people actually staying at each of the stay areas, and
in the case that the stay area selecting part determines that a sum of the actual stay volume is smaller than the required stay volume, the stay area selecting part selects one or more of the stay areas that is able to provide the total capacity exceeding a shortage of the required stay volume as the guiding destination stay area.

7. The people flow guiding system of claim 1, wherein
the people flow guiding system comprises a stay volume measuring part configured to measure an actual stay volume indicating the number of people actually staying at each of the stay areas, and
the stay area selecting part takes a representative value including an average value of the actual stay volume measured in the past as the capacities and calculates a sum of the capacities for the guiding destination stay areas.

8. A people flow guiding system comprising:
a required stay volume calculating part configured to acquire the number of people who are able to use a facility, and calculating the number of people who are unable to use the facility by subtracting the number of people with demand of usage for the facility retained beforehand from the number of people as acquired as a required stay volume for the facility;
a stay area selecting part configured to retain a plurality of areas available from the facility as stay areas for allowing a user to stay with correlated to capacities each being the number of people who are able to stay at each of the stay areas, and repeatedly perform a process of selecting the stay area from the stay areas as a guiding destination stay area in a predetermined order until a sum of the capacities of the guiding destination stay areas as selected is made equal to or larger than the required stay volume; and
a guiding part configured to deliver guidance information being information for guiding people to the guiding destination stay areas selected by the stay area selecting part.

9. A people flow guiding method implemented by a computer having a processor and a memory, comprising:
acquiring the number of people who are able to use a transportation system at a transportation facility according to an operation condition of the transportation system, and calculating the number of people who are unable to use the transportation system at the transportation facility by subtracting the number of people with demand of usage for the transportation facility retained beforehand from the number of people as acquired as a required stay volume for the transportation facility;
retaining a plurality of areas available from the transportation facility as stay areas for allowing a user to stay with correlated to capacities each being the number of people who are able to stay each of the stay areas, and repeatedly performing a process of selecting the stay area from the stay areas as a guiding destination stay area in a predetermined order until a sum of the capacities of the guiding destination stay areas as selected is made equal to or larger than the required stay volume; and
delivering guidance information being information for guiding people to the guiding destination stay areas selected by the stay area selecting part.
